(19) Europäisches Patentamt / European Patent Office / Office européen des brevets

(11) **EP 4 063 454 A1**

(12) **EUROPEAN PATENT APPLICATION**
published in accordance with Art. 153(4) EPC

(43) Date of publication:
**28.09.2022 Bulletin 2022/39**

(21) Application number: **21892075.9**

(22) Date of filing: **09.07.2021**

(51) International Patent Classification (IPC):
$C08L\ 33/06^{(2006.01)}$    $C08L\ 25/14^{(2006.01)}$
$C08L\ 25/12^{(2006.01)}$    $C08L\ 51/04^{(2006.01)}$
$C08F\ 220/10^{(2006.01)}$    $C08K\ 5/521^{(2006.01)}$
$C08F\ 212/08^{(2006.01)}$    $C08F\ 279/02^{(2006.01)}$
$C08F\ 2/18^{(2006.01)}$

(52) Cooperative Patent Classification (CPC):
C08F 2/18; C08F 212/08; C08F 220/10;
C08F 279/02; C08K 5/521; C08L 25/12;
C08L 25/14; C08L 33/06; C08L 51/04

(86) International application number:
**PCT/KR2021/008764**

(87) International publication number:
**WO 2022/102905 (19.05.2022 Gazette 2022/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.11.2020 KR 20200149422
06.07.2021 KR 20210088233**

(71) Applicant: **Lg Chem, Ltd.
Seoul 07336 (KR)**

(72) Inventors:
• **JU, Mincheol
Daejeon 34122 (KR)**
• **LEE, Hyung Sub
Daejeon 34122 (KR)**
• **LEE, Dae Woo
Daejeon 34122 (KR)**
• **SEO, Jae Bum
Daejeon 34122 (KR)**
• **SHIN, Minseung
Daejeon 34122 (KR)**
• **HONG, Sungwon
Daejeon 34122 (KR)**
• **KIM, Insoo
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **STYRENE COPOLYMER, THERMOPLASTIC RESIN COMPOSITION, AND METHODS FOR PRODUCING SAME**

(57) The present invention relates to a styrene copolymer, a thermoplastic resin composition, and methods of preparing the styrene copolymer and the thermoplastic resin composition. More particularly, the present invention relates to a styrene copolymer having a low residual oligomer content and excellent transparency due to uniform polymerization of components to be added; and a thermoplastic resin composition including the styrene copolymer and an acrylic rubber graft copolymer and being suitable for a molded article having excellent heat resistance, scratch resistance, and surface appearance.

**Description**

[Technical Field]

[Cross-Reference to Related Applications]

This application claims priority to Korean Patent Application No. 10-2020-0149422, filed on November 10, 2020, and Korean Patent Application No. 10-2021-0088233, re-filed on July 6, 2021, based on the priority of the above patent, in the Korean Intellectual Property Office, the disclosures of each of which are incorporated herein by reference.

The present invention relates to a styrene copolymer, a thermoplastic resin composition, and methods of preparing the styrene copolymer and the thermoplastic resin composition. More particularly, the present invention relates to a styrene copolymer having a low residual oligomer content and excellent transparency due to uniform polymerization of components to be added; a thermoplastic resin composition including the styrene copolymer and having excellent heat resistance, scratch resistance, and surface appearance; and methods of preparing the styrene copolymer and the thermoplastic resin composition.

[Background Art]

Acrylonitrile-butadiene-styrene (hereinafter referred to as "ABS")-based resins have excellent rigidity, chemical resistance, processability, and mechanical strength and are capable of imparting an aesthetically pleasing appearance to final products. Thus, ABS-based resins have been widely used in various fields, such as automotive products, electrical/electronic products and office equipment. However, since ABS-based resins are prepared by including a butadiene rubber polymer, the ABS-based resins are not suitable as outdoor materials due to poor weather resistance thereof.

To solve this problem and obtain a thermoplastic resin having excellent weather resistance and aging resistance in addition to excellent physical properties, acrylonitrile-styrene-acrylate (hereinafter referred to as "ASA")-based resins have been prepared by using a crosslinked alkyl (meth) acrylate rubber polymer not containing an ethylenically unsaturated polymer that causes UV-mediated aging in a graft copolymer. ASA-based resins have excellent weather resistance and aging resistance, and thus have been used in various fields, such as automobiles, ships, leisure goods, building materials, and gardening goods.

When ASA-based resins are applied to automobiles, in addition to weather resistance, excellent colorability, heat resistance, and scratch resistance are required for an aesthetically pleasing appearance.

For this purpose, when an ASA-based resin is compounded with a heat-resistant styrene-based resin and a polymethyl methacrylate resin, colorability and scratch resistance are improved, but two glass transition temperatures (Tg) are observed due lack of compatibility. In addition, since a dye or a pigment is not sufficiently dispersed, flow marks are generated on the surface of a product.

Therefore, there is increasing demand for a thermoplastic resin composition having improved heat resistance by reducing a residual oligomer content in an ASA-based resin and having improved scratch resistance and processability due to improvement in compatibility; and a method of preparing the thermoplastic resin composition.

[Related Art Documents]

[Patent Documents]

(Patent Document 1) US Patent No. 4448580

[Disclosure]

[Technical Problem]

Therefore, the present invention has been made in view of the above problems, and it is one object of the present invention to provide a styrene copolymer having improved compatibility due to a low residual oligomer content and having excellent transparency and a method of preparing the styrene copolymer.

It is another object of the present invention to provide a thermoplastic resin composition having excellent heat resistance, scratch resistance, and appearance by including the styrene copolymer and a method of preparing the thermoplastic resin composition.

It is yet another object of the present invention to provide a molded article manufactured using the thermoplastic resin composition.

The above and other objects can be accomplished by the present invention described below.

[Technical Solution]

In accordance with one aspect of the present invention, provided is a method of preparing a styrene copolymer, the method including:

adding a reaction solution including 100 parts by weight of a monomer mixture including 35 to 65 % by weight of a (meth)acrylate-based monomer, 10 to 30 % by weight of a vinyl cyanide-based monomer, and 20 to 40 % by weight of an aromatic vinyl-based monomer; 100 to 200 parts by weight of a water-based solvent; and 0.1 to 10 parts by weight of a dispersant to a reactor to perform polymerization,
wherein the aromatic vinyl-based monomer is styrene, one or more hydrogens of which are substituted with an alkyl group,
some of the aromatic vinyl-based monomer is fed into the reactor batchwise before start of polymerization, and a remainder is continuously fed into the reactor from a time point when a temperature of the reactor reaches 90 to 110 °C to perform polymerization.

A weight ratio of the batchwise fed aromatic vinyl-based monomer to the continuously fed aromatic vinyl-based monomer may be 1:0.4 to 1:2. In this case, the batchwise fed aromatic vinyl-based monomer may form blocks, and the continuously fed aromatic vinyl-based monomer may randomly combine with other monomers without forming blocks to form random arrangement.

A weight ratio of the aromatic vinyl-based monomer to the (meth)acrylate-based monomer may be 1:1 to 1:8.

The aromatic vinyl-based monomer may be styrene, one or more hydrogens of which are substituted with an alkyl group having 1 to 3 carbon atoms.

In the reactor, polymerization may be performed at 80 to 130 °C and 400 to 600 rpm for 8 to 10 hours.

The method of preparing a styrene copolymer may include adjusting a pH of polymerization slurry generated in the reactor to 1 to 4.

The dispersant may be a phosphate metal salt.

In accordance with another aspect of the present invention, provided is a styrene copolymer prepared by the above-described method and having a glass transition temperature (Tg) of 115 °C or higher, a residual oligomer content of 0.51 % by weight or less, and a refractive index of 1.55 or less.

Based on 100 % by weight in total of the styrene copolymer, the styrene copolymer may include 39 to 47 % by weight of a (meth) acrylate-based monomer, 18 to 21 % by weight of a vinyl cyanide-based monomer, and 35 to 43 % by weight of an alkyl-substituted styrene-based monomer.

The styrene copolymer may have a haze of 0.3 % or less and a color b value of 6.0 to 7.0.

In accordance with still another aspect of the present invention, provided is a thermoplastic resin composition including:

a styrene copolymer including a (meth)acrylate-based monomer, a vinyl cyanide-based monomer, and an aromatic vinyl-based monomer; and
a graft copolymer including an acrylic-based rubber polymer, an aromatic vinyl-based monomer, and a vinyl cyanide-based monomer,
wherein, based on 100 % by weight in total of the styrene copolymer, the styrene copolymer includes 39 to 47 % by weight of a (meth)acrylate-based monomer, 18 to 21 % by weight of a vinyl cyanide-based monomer, and 35 to 43 % by weight of a styrene-based monomer.

The aromatic vinyl-based monomer included in the styrene copolymer may be styrene, one or more hydrogens of which are substituted with an alkyl group, and the aromatic vinyl-based monomer included in the graft copolymer may be styrene.

In accordance with still another aspect of the present invention, provided is a method of preparing a thermoplastic resin composition, the method including:

mixing 55 to 75 % by weight of a styrene copolymer and 25 to 45 % by weight of a graft copolymer including an acrylic-based rubber polymer, an aromatic vinyl-based monomer, and a vinyl cyanide-based monomer and performing melt-kneading and extrusion, wherein the styrene copolymer is prepared by the above-described method.

In accordance with yet another aspect of the present invention, provided is a molded article manufactured using the above-described thermoplastic resin composition.

[Advantageous effects]

When a styrene copolymer according to the present invention is prepared, the composition of components to be added is uniformly distributed, thereby reducing a residual oligomer content and improving compatibility and transparency.

That is, the thermoplastic resin composition including the styrene copolymer according to the present invention has excellent heat resistance, scratch resistance, and appearance, and thus can be widely applied to various fields, such as automobiles, ships, leisure goods, building materials, and gardening goods.

[Best mode]

Hereinafter, the present invention will be described in detail to aid in understanding of the present invention.

The terms and words which are used in the present specification and the appended claims should not be construed as being confined to common meanings or dictionary meanings but should be construed as having meanings and concepts matching the technical spirit of the present invention in order to describe the present invention in the best fashion.

In this description, a polymer including a certain compound means a polymer prepared by polymerizing the compound, and a unit in the polymer is derived from the compound.

In this description, heat resistance may be measured by various methods known in the art, and unless otherwise specified, heat resistance refers to a glass transition temperature (Tg) measured using a differential scanning calorimeter (manufacturer: Ta Instruments, product name: DISCOVERY DSC25).

When a copolymer has a glass transition temperature (Tg) of 116 °C or higher, it may be judged that the copolymer is a heat-resistant copolymer.

In this description, weight average molecular weight may be measured using tetrahydrofuran (THF) as an eluate through gel permeation chromatography (GPC, Waters Breeze). In this case, weight average molecular weight is obtained as a relative value to a polystyrene standard (PS) specimen. Specifically, the weight average molecular weight is a weight average molecular weight (Mw) converted based on polystyrene by gel permeation chromatography (GPC, PL GPC220, Agilent Technologies).

Specifically, a polymer to be measured is dissolved in tetrahydrofuran to a concentration of 1 %, and 10 $\mu$l of the dissolved sample is injected into a gel permeation chromatograph (GPC) at a flow rate of 0.3 mL/min. At this time, analysis is performed at a sample concentration of 2.0 mg/mL (100 $\mu$l injection) at 30 °C. In this case, two columns (PLmixed B, Waters Co.) are connected in series, and an RI detector (2414, Agilent Waters Co.) is used. At this time, measurement is performed at 40 °C, and data is processed using ChemStation.

In this description, the composition ratio of a (co)polymer may mean the content of units constituting the (co)polymer, or may mean the content of units input during polymerization of the (co)polymer.

In this description, unless otherwise defined, "content" means weight, and "%" means "% by weight".

The present inventors confirmed that, when a styrene copolymer was prepared by polymerizing a (meth)acrylate-based monomer, a vinyl cyanide-based monomer, and an alkyl-substituted aromatic vinyl-based monomer in the presence of an aqueous solvent and a dispersant, a trade-off problem in which transparency and color gradually deteriorate depending on polymerization conversion rate due to difference in reactivity between monomers was not solved. However, when a specific monomer was added in portions, the trade-off was solved, and a residual oligomer content was reduced, thereby increasing compatibility and glass transition temperature. In addition, the heat resistance, scratch resistance, and surface quality of a composition including the styrene copolymer and an acrylic-based rubber graft copolymer were improved. Based on these results, the present inventors conducted further studies to complete the present invention.

**Method of preparing styrene copolymer**

A method of preparing a styrene copolymer according to an embodiment of the present invention includes a step of adding a reaction solution including 100 parts by weight of a monomer mixture including 35 to 65 % by weight of a (meth)acrylate-based monomer, 10 to 30 % by weight of a vinyl cyanide-based monomer, and 20 to 40 % by weight of an aromatic vinyl-based monomer; 100 to 200 parts by weight of a water-based solvent; and 0.1 to 10 parts by weight of a dispersant to a reactor to perform polymerization, wherein the aromatic vinyl-based monomer is styrene, one or more hydrogens of which are substituted with an alkyl group, some of the aromatic vinyl-based monomer is fed into the reactor batchwise before start of polymerization, and the remainder is continuously fed into the reactor from a time point when the temperature of the reactor reaches 90 to 110 °C to perform polymerization. In this case, a residual oligomer content may be reduced, thereby improving heat resistance and increasing compatibility.

In the step of initiating polymerization, the water-based solvent may include water. In this case, reaction heat may be easily controlled, and polymerization may proceed even at high viscosity, thereby ensuring a high polymerization conversion rate.

For example, based on 100 parts by weight of the monomer mixture, the water-based solvent may be included in an amount of 100 to 200 parts by weight, preferably 100 to 150 parts by weight. Within this range, monomers may be easily mixed, and polymerization stability may be improved, ensuring a uniform composition and a high polymerization conversion rate.

In this description, unless otherwise specified, the dispersant is an inorganic dispersant.

For example, the dispersant may be a phosphate metal salt, preferably tricalcium phosphate. In this case, polymerization stability may be increased, enabling preparation of a copolymer having a high polymerization conversion rate.

As a specific example, the tricalcium phosphate may include one or more selected from the group consisting of hydroxyapatite, $\alpha$-tricalcium phosphate, $\beta$-tricalcium phosphate, tetracalcium phosphate, amorphous calcium phosphate, monocalcium phosphate anhydrate, dicalcium phosphate anhydrate, octacalcium phosphate, monocalcium phosphate monohydrate, dicalcium phosphate dihydrate, $Na_2O$-$CaO$-$SiO_2$-$P_2O_5$, $CaOSiO_2$, $P_2O_5$-$CaO$-$Na_2O$, and $P_2O_5$-$CaO$-$K_2O$.

For example, based on 100 parts by weight of the monomer mixture, the dispersant may be included in an amount of 0.1 to 10 parts by weight, preferably 0.2 to 5 parts by weight. Within this range, polymerization may be performed easily, and uniform particles may be prepared, thereby providing advantageous effects during processing.

For example, when polymerization is performed using the water-based solvent and the dispersant, suspension polymerization is preferably used. For reference, when bulk polymerization is performed using an organic solvent, due to high viscosity, a product yield may decrease and a residual oligomer content may increase, thereby degrading heat resistance.

For example, the monomer mixture may include 35 to 65 % by weight of a (meth)acrylate-based monomer, 10 to 30 % by weight of a vinyl cyanide-based monomer, and 20 to 40 % by weight of an aromatic vinyl-based monomer, preferably 40 to 54 % by weight of a (meth)acrylate-based monomer, 21 to 30 % by weight of a vinyl cyanide-based monomer, and 25 to 35 % by weight of an aromatic vinyl-based monomer.

In this case, each monomer becomes a unit of a styrene copolymer.

Some of the aromatic vinyl-based monomer may be fed into a reactor batchwise before start of polymerization, and the remainder may be continuously fed into the reactor from a time point when the temperature of the reactor reaches 90 to 110 °C to perform polymerization. In this case, a trade-off problem in which transparency and color gradually deteriorate depending on polymerization conversion rates due to difference in reactivity between monomers may be solved, and a residual oligomer content may be reduced.

For example, the aromatic vinyl-based monomer may be an aromatic vinyl-based monomer in which one or more hydrogens are substituted with an alkyl group, as a specific example, a styrene monomer in which one or more hydrogens are substituted with an alkyl group having 1 to 3 carbon atoms. As a more specific example, the aromatic vinyl-based monomer may include one or more selected from $\alpha$-methylstyrene, $\alpha$-ethylstyrene, and p-methylstyrene, preferably $\alpha$-methylstyrene or $\alpha$-ethylstyrene.

In the preparation of the styrene copolymer of the present invention, when alkyl-substituted styrene having a steric hindrance is used, compared to styrene, heat resistance and transparency may be improved. Accordingly, the present invention preferably does not contain styrene in the preparation of the styrene copolymer.

For example, the batchwise fed aromatic vinyl-based monomer may be styrene, one or more hydrogens of which are substituted with an alkyl group having 1 to 3 carbon atoms.

For example, the continuously fed aromatic vinyl-based monomer may be styrene, one or more hydrogens of which are substituted with an alkyl group having 1 to 3 carbon atoms.

The batchwise fed aromatic vinyl-based monomer may form blocks, and the continuously fed aromatic vinyl-based monomer may form a random structure, unlike the batchwise fed aromatic vinyl-based monomer.

For example, the weight ratio of the batchwise fed aromatic vinyl-based monomer to the continuously fed aromatic vinyl-based monomer may be 1:0.4 to 1:2, as a specific example, 1:0.41 to 1:1.18. When the above range is satisfied, when the styrene copolymer is applied to a thermoplastic resin composition to be described later, in addition to transparency and heat resistance, scratch resistance may be improved.

When the (meth)acrylate-based monomer is included in a small amount, a styrene copolymer having a high refractive index may be prepared. When such a styrene copolymer is applied to a thermoplastic resin composition, the thermoplastic resin composition may have poor colorability. When the (meth) acrylate-based monomer is included in an excess amount, since the vinyl cyanide-based monomer and the aromatic vinyl-based monomer are included in relatively small amounts, a styrene copolymer having a low glass transition temperature may be prepared. When such a styrene copolymer is applied to a thermoplastic resin composition, the thermoplastic resin composition may have poor heat resistance and scratch resistance.

For example, the (meth)acrylate-based monomer may include one or more selected from (meth)acrylate, methyl(meth)acrylate, ethyl(meth)acrylate, and propyl(meth)acrylate, preferably methyl methacrylate.

A total amount of the (meth)acrylate-based monomer is fed batchwise before start of polymerization. In addition, methacrylate has, for example, a solubility of 1.5 g/100 ml in an aqueous phase. Accordingly, as a total amount is fed, the ratio of the (meth)acrylate-based monomer present in an organic phase is relatively increased, and the ratio of the (meth)acrylate-based monomer present in an aqueous phase is relatively decreased, thereby increasing polymerization participation.

For example, the weight ratio of the aromatic vinyl-based monomer to the (meth)acrylate-based monomer may be 1:1 to 1:8, preferably 1:1 to 1:2 or 1:3 to 1:8. When the above range is satisfied, difference in reactivity between monomers may be overcome, a uniform composition distribution may be provided within a final polymer chain, and a residual oligomer content may be reduced.

For example, the vinyl cyanide-based monomer may include one or more selected from acrylonitrile, methacrylonitrile, ethacrylate, phenyl acrylonitrile, $\alpha$-chloroacrylonitrile, and ethacrylonitrile, preferably acrylonitrile.

A total amount of the vinyl cyanide-based monomer is fed batchwise before start of polymerization. In addition, acrylonitrile has, for example, a solubility of 7 g/100 ml in an aqueous phase. Accordingly, as a total amount is fed, the ratio of the vinyl cyanide-based monomer present in an organic phase is relatively increased, and the ratio of the vinyl cyanide-based monomer present in an aqueous phase is relatively decreased, thereby increasing polymerization participation.

For example, in the reactor, polymerization may be performed at 80 to 130 °C and 400 to 600 rpm for 8 to 10 hours. In this case, there is an advantage in terms of styrene-based polymerization conversion rate, colorability, and reduction in residual oligomer content.

As a specific example, a reaction solution including a monomer mixture and a water-based solvent is fed into the reactor batchwise, and is suspension-polymerized at 80 to 90 °C for 3 to 4 hours. Then, after the temperature of the reactor reaches 90 to 110 °C, 6 to 24 % by weight of the aromatic vinyl-based monomer is continuously fed into the reactor for 5 to 7 hours to perform suspension polymerization. These conditions are most preferable in terms of the polymerization conversion rate of a styrene copolymer, transparency, and residual oligomer content. When polymerization is performed for a time exceeding the above range, difference in polymerization conversion rates is insignificant, transparency is reduced, and residual oligomer content is increased. When polymerization is performed for a time less than the above range, polymerization conversion rate is decreased, and residual oligomer content is increased.

Then, the pH of polymerization slurry generated in the reactor as a result of polymerization is adjusted to 1 to 4 to obtain a styrene copolymer in the form of beads. When the above described pH range is satisfied, a dispersant included in reaction may be effectively removed, thereby providing a high-purity product.

In this description, pH measurement methods commonly known in the art may be used to measure pH. For example, a pH meter may be used.

The pH of the polymerization slurry may be adjusted using an acid solution, such as formic acid, hydrochloric acid, or acetic acid.

When the styrene copolymer is prepared, in addition to the above-described dispersant, an initiator and an antioxidant may be included.

For example, the initiator is a peroxide, and preferably includes one or more selected from t-butylperoxy-2-ethylhexanoate, benzoyl peroxide, t-butyl peroxyisobutyrate, 1,1-bis(t-butylperoxy)cyclohexane, 2,2-bis(4,4-di-t-butylperoxycyclohexane)propane, t-hexylperoxyisopropyl monocarbonate, t-butyl peroxylaurate, t-butylperoxy isopropyl monocarbonate, t-butylperoxy 2-ethylhexyl monocarbonate, t-hexyl peroxybenzoate, t-butyl peroxyacetate, 2,2-bis(t-butylperoxy)butane, t-butyl peroxybenzoate, dicumyl peroxide, 2,5-dimethyl-2,5-bis(t-butylperoxy)hexane, t-butylcumyl peroxide, di-t-butyl peroxide, and di-t-amine peroxide. In this case, polymerization may be easily performed, thereby maintaining mechanical properties, weather resistance, heat resistance, and scratch resistance in high levels.

For example, based on 100 parts by weight of the monomer mixture, the initiator may be included in an amount of 0.01 to 1 part by weight, preferably 0.01 to 0.5 parts by weight, more preferably 0.01 to 0.2 parts by weight. Within this range, polymerization may be easily performed, thereby maintaining mechanical properties, weather resistance, heat resistance, and scratch resistance in high levels.

For example, the antioxidant is an organic phosphate, preferably polyoxyethylene alkylether phosphate. In this case, polymerization may be easily performed, thereby maintaining mechanical properties, weather resistance, heat resistance, and scratch resistance in high levels.

For example, based on 100 parts by weight of the monomer mixture, the antioxidant may be included in an amount of 0.001 to 1 part by weight, preferably 0.001 to 0.5 parts by weight. Within this range, polymerization may be easily performed, thereby maintaining mechanical properties, weather resistance, heat resistance, and scratch resistance in high levels.

**Styrene copolymer**

Based on a total weight (wt%) of the styrene copolymer prepared by the above-described preparation method, the styrene copolymer may include 39 to 47 % by weight of a (meth)acrylate-based monomer, 18 to 21 % by weight of a vinyl cyanide-based monomer, and 35 to 43 % by weight of an alkyl-substituted styrene-based monomer. In this case, a uniform composition distribution may be provided within a final polymer chain.

In this case, each monomer becomes a unit of the styrene copolymer.

The styrene copolymer may improve the heat resistance and scratch resistance of a thermoplastic resin composition. In addition, when the styrene copolymer includes the (meth)acrylate-based monomer, the styrene copolymer may improve the weather resistance of a thermoplastic resin composition.

Based on a total weight (wt%) of the styrene copolymer, the styrene copolymer may include 40 to 46 % by weight of a (meth)acrylate-based monomer, 18 to 21 % by weight of a vinyl cyanide-based monomer, and 35 to 43 % by weight of an alkyl-substituted styrene-based monomer. In this case, a uniform composition distribution may be provided within a final polymer chain.

For example, the styrene copolymer may have a residual oligomer content of 0.51 % by weight or less, as a specific example, 0.50 to 0.51 % by weight.

In this description, residual oligomer content may be measured using a method commonly practiced in the art. For example, 1 g of a sample is dissolved in 10 mL of chloroform, and polymers are precipitated using methanol to obtain the supernatant of the sample. Then, the supernatant is filtered using a 0.2 $\mu$m disc syringe filter, and residual oligomer content is measured by gel chromatography. When the content of residual oligomers included in the styrene copolymer is within the above range, a high-purity copolymer may be prepared.

For example, the styrene copolymer may have a haze of 0.3 % or less, as a specific example, 0.2 % or less.

In this description, haze may be measured at room temperature according to ASTM D-1003.

For example, the styrene copolymer may have a color b value of 6.0 to 7.0, as a specific example, 6.0 to 6.6.

In this description, a color b value may be measured using a method known in the art. For example, a Hunter Lab color coordinate system may be used to measure a color b value.

For example, the styrene copolymer may be a low refractive index copolymer having a refractive index of 1.55 or less, as a specific example, 1.53 to 1.54.

In this description, a refractive index may be measured using a method known in the art. For example, a refractive index may be measured at 25 °C using an Abbe refractometer according to ASTM D542.

In addition, the refractive index of a styrene copolymer may be calculated by substituting the refractive index and content of each component (or monomer) constituting the styrene copolymer into Equation 1 below.

[Equation 1]

$$RI = \sum (Wti \times RIi)$$

In Equation 1, Wti denotes the weight fraction (%) of each component (or monomer) of a styrene copolymer, and RIi denotes the refractive index of a monomer forming the styrene copolymer.

When the styrene copolymer is improved in terms of glass transition temperature, a thermoplastic resin composition having excellent scratch resistance may be provided.

For example, the styrene copolymer may have a glass transition temperature (Tg) of 115 °C or higher, as a specific example, 115 to 130 °C.

The styrene copolymer may have a polymerization conversion rate of 95 % by weight or more, preferably 97 % by weight or more.

In this description, when polymerization conversion rate is measured, some of polymers in a reactor is withdrawn, the moisture content thereof is measured, and the actual weight of the sample is calculated by Equation 2 below. Then, the sample is dissolved in THF and MeOH, and is precipitated. Then, floating matter is dried, and the weight thereof is measured. By Equation 3, polymerization conversion rate is calculated.

[Equation 2]

Actual weight of sample = (Collected reactants) -

(Collected reactants × moisture content/100)

[Equation 3]

$$\text{Polymerization conversion rate (\%)} = \text{(Sample after drying)} / \text{(Sample before drying)} \times 100$$

For example, the styrene copolymer may have a weight average molecular weight of 40,000 to 200,000 g/mol, preferably 70,000 to 150,000 g/mol, more preferably 80,000 to 130,000 g/mol. When the above range is satisfied, the balance of physical properties with graft copolymers in a thermoplastic resin composition to be described later, i.e., the balance of mechanical properties, processability, and appearance, may be easily adjusted.

As the styrene copolymer, a commercially available material may be used as long as the material follows the definition of the present invention.

For example, the styrene copolymer may be a methyl methacrylate-styrene-alpha-methylstyrene copolymer.

In the present invention, when the styrene copolymer satisfies all of haze, a color value, a residual oligomer content, and a refractive index described above, balance between heat resistance and transparency may be maintained even at a high polymerization conversion rate. When such a copolymer is applied to a thermoplastic resin composition to be described later, the thermoplastic resin composition may have excellent scratch resistance, and may reduce surface flow marks.

When the reduction amount of a dispersant is measured, some of reactants that have been subjected to a step of adjusting the pH of generated polymerization slurry to 1 to 4 may be decomposed with sulfuric acid, nitric acid, and hydrogen peroxide. Then, in an ultrapure dilution state, the reduction amount of the dispersant may be measured using an inductively coupled plasma (ICP) spectrometer by inorganic analysis.

For example, the reduction amount of a dispersant of the styrene copolymer may be 100 ppm or less, as a specific example, 70 ppm or less.

Each component constituting a thermoplastic resin composition including the above-described styrene copolymer will be described as follows.

**Thermoplastic resin composition**

Styrene copolymer

In describing a thermoplastic resin composition of the present invention, all of the above-described styrene copolymer is included.

For example, based on a total weight of the thermoplastic resin composition, the styrene copolymer may be included in an amount of 55 to 75 % by weight, preferably 55 to 70 % by weight, more preferably 55 to 65 % by weight. Within this range, processability and scratch resistance may be improved while maintaining heat resistance.

Graft copolymer

A graft copolymer of the present invention may be prepared by graft-polymerizing acrylic-based rubber, an aromatic vinyl monomer, and a vinyl cyanide-based monomer. For example, the graft copolymer may be a graft copolymer including an acrylic-based rubber polymer having an average particle diameter of 50 to 500 nm. In this case, mechanical properties, such as impact strength and tensile strength, may be excellent, and heat resistance, colorability, and weather resistance may be excellent.

For example, the acrylic-based rubber included in the graft copolymer may have an average particle diameter of 50 to 500 nm, preferably 70 to 450 nm, more preferably 100 to 350 nm. When the above range is satisfied, mechanical properties and heat resistance may be excellent. When the average particle diameter of the acrylic-based rubber is less than the range, mechanical properties such as impact strength and tensile strength may be degraded. When the average particle diameter of the acrylic-based rubber exceeds the range, thermal stability may be reduced.

In this description, average particle diameter may be measured by dynamic light scattering. Specifically, the average particle diameter of a specimen in latex form may be measured in a Gaussian mode using a particle size distribution analyzer (Nicomp 380). In a particle size distribution measured by dynamic light scattering, an arithmetic average particle diameter may mean a scattering intensity average particle diameter.

As a specific measurement example, a sample is prepared by diluting 0.1 g of latex (total solids content (TSC) : 35 to 50 wt%) 1,000 to 5,000-fold with distilled water, i.e., a sample is diluted appropriately so as not to deviate significantly from an intensity setpoint of 300 kHz and is placed in a glass tube. Then, the average particle diameter of the sample is measured using a flow cell in auto-dilution in a measurement mode of dynamic light scattering/intensity 300 kHz/intensity-weight Gaussian analysis. At this time, setting values are as follows: temperature: 23 °C; measurement wavelength: 632.8 nm; and channel width: 10 μsec.

For example, based on a total weight of the graft copolymer, the acrylic-based rubber included in the graft copolymer may be included in an amount of 20 to 60 % by weight, preferably 30 to 55 % by weight, more preferably 40 to 50 % by weight. Within this range, weather resistance, impact strength, and scratch resistance may be excellent.

For example, the acrylic-based rubber may be prepared by emulsion-polymerizing a (meth)acrylate-based monomer, as a specific example, may be prepared by mixing a (meth)acrylate-based monomer, an emulsifier, an initiator, a grafting agent, a crosslinking agent, an electrolyte, and water and performing emulsion polymerization. In this case, due to excellent grafting efficiency, physical properties such as impact resistance may be excellent.

For example, the (meth)acrylate-based monomer may include one or more selected from alkyl (meth)acrylates having 2 to 8 carbon atoms, preferably an alkyl acrylate containing an alkyl group having 4 to 8 carbon atoms, more preferably butyl acrylate or ethylhexyl acrylate.

In this description, the (meth)acrylate-based monomer is used in the sense of including both an acrylate-based monomer and a methacrylate-based monomer.

The emulsion polymerization may be graft emulsion polymerization. For example, the emulsion polymerization may be performed at 50 to 85 °C, preferably 60 to 80 °C.

The initiator is a radical initiator. As a specific example, the initiator may include one or more selected from inorganic peroxides including sodium persulfate, potassium persulfate, ammonium persulfate, potassium superphosphate, and hydrogen peroxide; organic peroxides including t-butyl peroxide, cumene hydroperoxide, p-menthane hydroperoxide, dit-butyl peroxide, t-butylcumyl peroxide, acetyl peroxide, isobutyl peroxide, octanoyl peroxide, dibenzoyl peroxide, 3,5,5-trimethylhexanol peroxide, and t-butylperoxy isobutyrate; and azo compounds including azobis isobutyronitrile, azobis-2,4-dimethylvaleronitrile, azobis(cyclohexanecarbonylnitrile), and azobis isobutyric acid methyl.

In addition to the initiator, an activator may be further added to promote initiation reaction.

For example, the activator may include one or more selected from sodium formaldehyde sulfoxylate, sodium ethylenediamine tetraacetate, ferrous sulfate, dextrose, sodium pyrophosphate, anhydrous sodium pyrophosphate, and sodium sulfate.

For example, based on 100 parts by weight in sum of rubber and monomers constituting the graft copolymer, the initiator may be included in an amount of 0.001 to 1 part by weight, preferably 0.01 to 0.5 parts by weight, more preferably 0.02 to 0.1 parts by weight. Within this range, emulsion polymerization may be performed easily, and the residual amount of the initiator in the graft copolymer may be minimized to an amount of several tens of ppm.

The weight of the rubber is based on solids in the case of latex, and may be the weight of monomers added during rubber preparation.

For example, the emulsifier may include one or more selected from a potassium compound of alkylbenzene sulfonate, a sodium compound of alkylbenzene sulfonate, a potassium compound of alkyl carboxylate, a sodium compound of alkyl carboxylate, a potassium compound of oleic acid, a sodium compound of oleic acid, a potassium compound of alkyl sulfate, a sodium compound of alkyl sulfate, a potassium compound of alkyl dicarboxylate, a sodium compound of alkyl dicarboxylate, a potassium compound of alkyl ether sulfonate, a sodium compound of alkyl ether sulfonate, and an ammonium compound of allyloxynonylphenoxypropane-2-yloxy methylsulfonate, preferably sodium dodecylbenzenesulfonate.

As the emulsifier, a commercially available material may be used. For example, one or more selected from SE10N, BC-10, BC-20, HS10, Hitenol KH10, and PD-104 may be used as the emulsifier.

For example, based on 100 parts by weight in sum of rubber and monomers constituting the graft copolymer, the emulsifier may be included in an amount of 0.15 to 2.0 parts by weight, preferably 0.3 to 1.5 parts by weight, more preferably 0.5 to 1.2 parts by weight. Within this range, emulsion polymerization may be performed easily, and the residual amount of the initiator in the graft copolymer may be minimized to an amount of several tens of ppm.

When emulsion polymerization is performed, a molecular weight modifier may be further introduced. For example, the molecular weight modifier may include one or more selected from t-dodecyl mercaptan, n-dodecyl mercaptan, and alpha-methylstyrene dimers, preferably t-dodecyl mercaptan.

For example, based on 100 parts by weight in sum of monomers constituting the graft copolymer, the molecular weight modifier may be included in an amount of 0.1 to 1 part by weight, preferably 0.2 to 0.8 parts by weight, more preferably 0.4 to 0.6 parts by weight.

The emulsion polymerization may be initiated after monomers and the like are fed into a reactor batchwise. Alternatively, some of monomers and the like may be fed into a reactor before start of emulsion polymerization, and the remainder may be continuously fed into the reactor after start of emulsion polymerization, or emulsion polymerization may be performed while continuously feeding monomers and the like for a certain period of time.

The obtained graft copolymer may be in the form of latex, and may be recovered in a dried powder form through aggregation, dehydration, and drying processes.

As a coagulant used for aggregation, salts such as calcium chloride, magnesium sulfate, and aluminum sulfate, acidic substances such as sulfuric acid, nitric acid, and hydrochloric acid, and mixtures thereof may be used.

The aromatic vinyl-based monomer included in the graft copolymer may include one or more selected from styrene, $\alpha$-methylstyrene, $\alpha$-ethylstyrene, and p-methylstyrene, preferably styrene.

For example, based on a total weight of the graft copolymer, the aromatic vinyl-based monomer included in the graft copolymer may be included in an amount of 10 to 50 % by weight, preferably 20 to 45 % by weight. Within this range, mechanical properties, such as tensile strength and impact strength, and processability may be excellent.

For example, the aromatic vinyl-based monomer may include one or more selected from the group consisting of styrene, $\alpha$-methyl styrene, o-methyl styrene, p-methyl styrene, m-methyl styrene, ethyl styrene, isobutyl styrene, t-butyl styrene, o-bromo styrene, p-chloro styrene, m-bromo styrene, o-chlorostyrene, p-chloro styrene, m-chlorostyrene, vinyltoluene, vinylxylene, fluorostyrene, and vinylnaphthalene. In this case, processability may be excellent due to proper fluidity, and mechanical properties such as tensile strength and impact strength may be excellent.

As the vinyl cyanide-based monomer included in the graft copolymer, the types of the aromatic vinyl-based monomer included in the above-described styrene copolymer may be used.

For example, based on a total weight of the graft copolymer, the vinyl cyanide-based monomer included in the graft copolymer may be included in an amount of 5 to 30 % by weight, preferably 5 to 25 % by weight, more preferably 10 to 20 % by weight. Within this range, impact resistance and processability may be excellent.

In this description, the term "total weight of a copolymer" may mean the actual total weight of the obtained copolymer or may mean the total weight of rubber and/or monomers added instead of the copolymer.

As the graft copolymer, a commercially available material may be used as long as the material follows the definition of the present invention.

Based on a total weight of the thermoplastic resin composition, the graft copolymer may be included in amount of 25 to 45 % by weight, preferably 20 to 45 % by weight, more preferably 30 to 45 % by weight. Within this range, mechanical properties, such as impact strength and tensile strength, heat resistance, scratch resistance, and colorability may be excellent. When the graft copolymer is included in an amount less than the above range, scratch resistance may be reduced. When the graft copolymer is included in an amount exceeding the above range, fluidity may be reduced.

Additives

For example, the thermoplastic resin composition may include one or more selected from the group consisting of a lubricant, an antioxidant, a release agent, a pigment, a dye, and a UV stabilizer. In this case, weather resistance, heat resistance, processability, and scratch resistance may be maintained at high levels without deterioration of mechanical properties.

For example, the lubricant may include one or more selected from the group consisting of ethylene bis stearamide, oxidized polyethylene wax, and magnesium stearate. Preferably, the lubricant is ethylene bis stearamide. In this case, the wettability of the composition of the present may be improved, and the mechanical properties thereof may be excellent.

For example, based on 100 parts by weight in total of the styrene copolymer and the graft copolymer, the lubricant may be included in an amount of 0.1 to 3 parts by weight, preferably 0.1 to 2 parts by weight, more preferably 0.05 to 1.5 parts by weight. Within this range, the wettability of the composition of the present may be improved, and the mechanical properties thereof may be excellent.

For example, the antioxidant may include a phenolic antioxidant, a phosphorus antioxidant, or a mixture thereof. In this case, oxidation by heat may be prevented during extrusion, and mechanical properties may be excellent.

For example, based on 100 parts by weight in total of the styrene copolymer and the graft copolymer, the antioxidant may be included in an amount of 0.001 to 3 parts by weight, preferably 0.001 to 1 part by weight, more preferably 0.005 to 1 part by weight. Within this range, oxidation by heat may be prevented during extrusion, and mechanical properties may be excellent.

For example, based on 100 parts by weight in total of the styrene copolymer and the graft copolymer, the dye may be included in an amount of 0.1 to 1.5 parts by weight, preferably 0.5 to 1 part by weight. Within this range, color expression may be excellent without deterioration in the intrinsic physical properties of the composition of the present invention.

For example, the thermoplastic resin composition may have a glass transition temperature of 116 °C or higher, preferably 116 to 119 °C.

In this description, glass transition temperature may be measured using a differential scanning calorimeter (manufacturer: Ta Instruments, product name: DISCOVERY DSC25).

For example, the thermoplastic resin composition may have a pencil hardness of H or higher, preferably H to 4H as measured at an angle of 45° under a load of 0.5 kg using a pencil hardness tester (Cometech) according to ASTM D3363.

In the thermoplastic resin composition of the present invention, the aromatic vinyl-based monomer included in the styrene copolymer may be styrene, one or more hydrogens of which are substituted with an alkyl group, and the aromatic vinyl-based monomer included in the graft copolymer may be styrene.

**Method of preparing thermoplastic resin composition**

In describing a method of preparing a thermoplastic resin composition according to the present invention, all descriptions of the above described styrene copolymer and thermoplastic resin composition are included.

For example, the method of preparing a thermoplastic resin composition may include a step of mixing 55 to 75 % by weight of a styrene copolymer and 25 to 45 % by weight of a graft copolymer including an acrylic-based rubber polymer, an aromatic vinyl-based monomer, and a vinyl cyanide-based monomer and performing melt-kneading and extrusion.

For example, in the melt-kneading step, the above-described other additives may be included.

For example, the melt-kneading and extrusion step may be performed using one or more selected from a single-screw extruder, a twin-screw extruder, and a Banbury mixer. As a preferred example, uniform mixing may be performed using a twin-screw extruder, and then extrusion may be performed to obtain a thermoplastic resin composition in pellet form. In this case, mechanical properties, thermal properties, scratch resistance, and appearance may be excellent.

As another example, the method of preparing a thermoplastic resin composition may include a step of preparing pellets by mixing the styrene copolymer and the graft copolymer, uniformly dispersing the mixture using a single-screw extruder, a twin-screw extruder, or a Banbury mixer, performing extrusion to obtain an extrudate, passing the extrudate through a water bath, and cutting the extrudate to obtain pellets.

For example, the step of preparing pellets using an extrusion kneader may be performed at a barrel temperature of 200 to 270 °C, preferably 220 to 270 °C. In this case, a throughput per unit time may be adequate, melt-kneading may be sufficiently performed, and thermal decomposition of resin components may be prevented.

For example, the step of preparing pellets using an extrusion kneader may be performed at a screw rotation rate of 200 to 300 rpm, preferably 250 to 300 rpm. In this case, a throughput per unit time may be adequate, and thus process efficiency may be excellent. In addition, excessive cutting may be suppressed.

For example, an injection-molded article may be manufactured from the thermoplastic resin composition pellets using an injection machine. At this time, injection may be performed at an injection barrel temperature of 210 to 250 °C, preferably 220 to 250 °C.

In addition, a molded article including the thermoplastic resin composition of the present invention will be described. In describing the molded article including the thermoplastic resin composition of the present invention, all of the above-described thermoplastic resin composition is included.

**Molded article**

For example, a molded article of the present invention may be manufactured using the thermoplastic resin composition of the present invention. In this case, transparency, processability, scratch resistance, and surface flow mark properteis may be improved while maintaining heat resistance.

The use of the molded article is not particularly limited. For example, the use of the molded article may include one or more selected from the group consisting of automobile parts, electrical and electronic parts, and building materials.

In describing the styrene copolymer, the method of preparing the styrene copolymer, the thermoplastic resin composition, the method of preparing the thermoplastic resin composition, and the molded article according to the present invention, it should be noted that other conditions or equipment not explicitly described herein may be appropriately selected within the range commonly practiced in the art without particular limitation.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

**[Examples]**

Materials used in Examples 1 to 8, Comparative Examples 1 to 6, and Reference Examples 1 to 3 are as follows.

- (B) Graft copolymer: Graft copolymer (SA130, LG Chemical Co.) having a rubber average particle diameter of 120nm
- Lubricant: Ethylene bis stearamide (EBA)
- Antioxidant: Irganox 1010

Example 1

<Preparation of styrene copolymer (A)>

50 parts by weight of methyl methacrylate (hereinafter referred to as "MMA"), 18 parts by weight of α-methylstyrene (18 parts by weight of a total of 28 parts by weight of α-methylstyrene was fed batchwise; hereinafter referred to as "batchwise fed AMS"), 22 parts by weight of acrylonitrile (hereinafter referred to as "AN"), 100 parts by weight of deionized water, 0.05 parts by weight of 1,1-bis(t-butylperoxy)cyclohexane, 1.0 part by weight of tricalcium phosphate, and 0.005 parts by weight of polyoxyethylene alkylether phosphate were added to a reactor, and then polymerization was initiated by raising temperature to 100 °C at 500 rpm.

When polymerization temperature reached 100 °C, 10 parts by weight of α-methylstyrene (hereinafter referred to as "continuously fed AMS") was continuously fed to the reactor for 5 hours, and polymerization was performed for 9 hours to obtain polymerization slurry. Based on 100 parts by weight in total of MMA, batchwise fed AMS, AN, and continuously fed AMS, 114 parts by weight of deionized water, 0.3 parts by weight of 1,1-bis(t-butylperoxy)cyclohexane, 1.3 parts by weight of tricalcium phosphate, and 0.005 parts by weight of polyoxyethylene alkylether phosphate were fed to the reactor.

Formic acid was added to the prepared polymerization slurry to adjust the pH of the slurry to 2.5 to remove tricalcium phosphate used as a dispersant. Then, washing, dehydration, and drying were performed to obtain a styrene copolymer in the form of beads.

Some of the styrene copolymer in the form of beads was wet-decomposed with sulfuric acid, nitric acid, and hydrogen peroxide. Then, in an ultrapure dilution state, inorganic analysis was performed using an inductively coupled plasma (ICP) spectrometer to measure the remaining amount of tricalcium phosphate. As a result, the remaining amount of tricalcium phosphate was 100 ppm or less.

The prepared copolymer had a refractive index of 1.531 and a polymerization conversion rate of 98 %.

When composition distribution in the prepared styrene copolymer was analyzed by FT-IR. As a result, the composition distribution was 46 % by weight of MMA, 35.5 % by weight of AMS, and 18.5 % by weight of AN.

<Preparation of thermoplastic resin composition>

1 part by weight of a lubricant and 0.2 parts by weight of an antioxidant were added to 60 % by weight of the prepared styrene copolymer (A) and 40 % by weight of the graft copolymer (B), and the mixture was fed into an extruder (28Φ) set to 240 °C to prepare a resin in pellet form. Then, the resin was injected to obtain a specimen.

Examples 2 to 8

Specimens were prepared in the same manner as in Example 1, except that the components, contents, and split feeding time shown in Table 1 below were used to prepare the styrene copolymer (A).

Comparative Examples 1 to 6 and Reference Examples 1 to 3

Specimens were prepared in the same manner as in Example 1, except that the components, contents, and split feeding time shown in Table 2 below were used to prepare the styrene copolymer (A). For reference, in Comparative Example 5 and Reference Example 1, styrene (hereinafter referred to as "SM") was used instead of AMS.

Comparative Example 6

When the styrene copolymer (A) was prepared, a monomer solution was prepared by mixing 9 parts by weight of toluene as a reaction solvent, 28 parts by weight of AMS, 50 parts by weight of MMA, and 22 parts by weight of AN, and then 0.12 parts by weight of 1,1-bis(t-butylperoxy)cyclohexane was added to the polymerization solution. Then, the mixture was fed into a static mixer located upstream of a reactor at a constant rate of 7 kg/hr, and 50 % of polymers inside the reactor was allowed to pass through the static mixer, so that the polymers were uniformly mixed with the input monomers and introduced into the reactor to perform bulk polymerization.

At this time, the same process as in Example 1 was performed, except that polymerization was performed at a reactor temperature of 115 °C, the polymerization products were allowed to pass through reactors 2 and 3 having a capacity of 16 liters, and then unreacted monomers and the reaction solvent were recovered and removed in a devolatilization tank set to 235 °C and 15 torr to obtain a resin in pellet form.

**[Test Examples]**

The properties of the specimens prepared in Examples 1 to 8, Comparative Examples 1 to 6, and Reference Examples 1 to 3 were measured according to the following methods, and the results are shown in Tables 1 and 2.

**[0166]** * Refractive index: Refractive index was measured at 25 °C using an Abbe refractometer according to ASTM D542.

**[0167]** * Polymerization conversion rate (% by weight): Some of polymerization products in a reactor was withdrawn. Using the polymerization products, moisture content was measured, and the actual weight of the sample was calculated by Equation 2 below. Then, the sample was dissolved in a mixture of THF and MeOH, and then was precipitated to obtain floating matter. The floating matter was dried, and the weight thereof was measured. Then, polymerization conversion rate was calculated by substituting the measured values into Equation 3 below.

$$[Equation\ 2]$$

$$Actual\ weight\ of\ sample\ =\ (Collected\ reactants)\ -$$

$$(Collected\ reactants\ \times\ moisture\ content/100)$$

$$[Equation\ 3]$$

$$Polymerization\ conversion\ rate\ (\%)\ =\ (Sample\ after$$

$$drying)/(Sample\ before\ drying)\ \times\ 100$$

**[0168]** * Haze: Haze was measured at 25 °C according to ASTM D-1003.

**[0169]** * Color b: Color b was measured using a Hunter Lab color coordinate system.

**[0170]** * Residual oligomer content (% by weight): 1 g of a sample was dissolved in 10 mL of chloroform, and polymers were precipitated using methanol to obtain the supernatant of the sample. Then, the supernatant was filtered using a 0.2 $\mu$m disc syringe filter, and residual oligomer content was measured by gel chromatography (ALS-GC/FID).

**[0171]** * Pencil hardness: Pencil hardness was measured using a pencil hardness tester (Cometech) according to ASTM D3363. Specifically, a pencil was fixed at an angle of 45°, and the surface of a specimen was scratched with the pencil under a load of 0.5 kg. At this time, pencils of various hardness (2B, B, HB, F, H) were used. The tests were conducted in the order of 2B, B, HB, F, and H. After scratching, whether the surface was scratched was confirmed by visual observation.

**[0172]** * Glass transition temperature (°C): Glass transition temperature was measured using a differential scanning calorimeter (manufacturer: Ta Instruments, product name: DISCOVERY DSC25).

**[0173]** * Flow marks: Flow marks were measured by visually observing the state of an injection-molded product according to a five-point method. A score of 5 indicates excellent, and a score of 1 indicates poor.

[Table 1]

| Classification | Example 1 | Example 2 | Example 3 | Example 4 | Example 5 | Example 6 | Example 7 | Example 8 |
|---|---|---|---|---|---|---|---|---|
| Composition of A (AMS) | 28 | 28 | 28 | 28 | 33 | 33 | 33 | 28 |
| Composition of A (SM) | - | - | - | - | - | - | - | - |
| Composition of A (MMA) | 50 | 50 | 50 | 50 | 45 | 45 | 45 | 50 |
| Composition of A (AN) | 22 | 22 | 22 | 22 | 22 | 22 | 22 | 22 |
| Initial composition of A (continuously fed AMS) | 18 | 18 | 18 | 13 | 23 | 23 | 23 | 18 |

(continued)

| Classification | | Example 1 | Example 2 | Example 3 | Example 4 | Example 5 | Example 6 | Example 7 | Example 8 |
|---|---|---|---|---|---|---|---|---|---|
| Initial composition of A (MMA) | | 50 | 50 | 50 | 50 | 45 | 45 | 45 | 50 |
| Initial composition of A (AN) | | 22 | 22 | 22 | 22 | 22 | 22 | 22 | 22 |
| Split feeding of A (continuously fed AMS) | | 10 | 10 | 10 | 15 | 10 | 10 | 10 | 10 |
| Split feeding of A (AMS start, min) | | 0 | 0 | 0 | 0 | 0 | 0 | 0 | 0 |
| Split feeding of A (AMS end, min) | | 300 | 360 | 420 | 360 | 300 | 360 | 320 | 360 |
| Reactor (rpm) | | 500 | 500 | 500 | 500 | 500 | 500 | 500 | 600 |
| Composition distribution of A (AMS) | | 35.5 | 35.5 | 35.7 | 35.2 | 39.6 | 39.8 | 39.8 | 35.5 |
| Composition distribution of A (MMA) | | 46 | 45.5 | 45.5 | 45.3 | 41.5 | 40 | 39.8 | 45.3 |
| Composition distribution of A (AN) | | 18.5 | 19 | 19.8 | 19.5 | 18.9 | 20.2 | 20.4 | 19.2 |
| Physical properties of A (refractive index) | | 1.531 | 1.531 | 1.532 | 1.531 | 1.535 | 1.536 | 1.536 | 1.531 |
| Physical properties of A (polymerization conversion rate, %) | | 98 | 98 | 98 | 98 | 98 | 97 | 97 | 98 |
| Physical properties of A (haze, %) | | 0.2 | 0.2 | 0.2 | 0.2 | 0.2 | 0.2 | 0.2 | 0.2 |
| Physical properties of A (color b value) | | 6.4 | 6.3 | 6.3 | 6.3 | 6.2 | 6.2 | 6.2 | 6.3 |
| Physical properties of A (Tg) | | 119.5 | 120.0 | 119.1 | 119.3 | 120.8 | 121.2 | 120.8 | 120.9 |
| Oligomer content of A (%) | | 0.51 | 0.5 | 0.51 | 0.5 | 0.5 | 0.5 | 0.5 | 0.5 |
| Physical properties of thermoplastic resin composition | Scratch resistance | H | H | H | H | H | H | H | H |
| | Tg (°C) | 116.7 | 117 | 116 | 116.3 | 117.9 | 118.1 | 117.7 | 118 |
| | Flow marks | 5 | 5 | 5 | 5 | 5 | 5 | 5 | 5 |

(In Table 1, A refers to a styrene copolymer.)

[Table 2]

| Classification | Comparative Example 1 | Comparative Example 2 | Comparative Example 3 | Comparative Example 4 | Comparative Example 5 | Comparative Example 6 | Reference Example 1 | Reference Example 2 | Reference Example 3 |
|---|---|---|---|---|---|---|---|---|---|
| Composition of A (AMS) | 28 | 33 | 10 | 50 | - | 28 | - | 28 | 28 |
| Composition of A (SM) | - | - | - | - | 28 | - | 28 | - | - |
| Composition of A (MMA) | 50 | 45 | 70 | 30 | 50 | 50 | 50 | 50 | 50 |
| Composition of A (AN) | 22 | 22 | 20 | 20 | 22 | 22 | 22 | 22 | 22 |
| Initial composition of A (batchwise-fed AMS) | 28 | 33 | 10 | 50 | SM 28 | 28 | SM 18 | 18 | 18 |
| Initial composition of A (MMA) | 50 | 45 | 70 | 30 | 50 | 50 | 50 | 40 | 50 |
| Initial composition of A (AN) | 22 | 22 | 20 | 20 | 22 | 22 | 22 | 22 | 12 |
| Split feeding of A (continuously fed AMS) | - | - | - | - | - | - | SM 10 | MMA 10 | AN 10 |
| Split feeding of A (AMS start, min) | - | - | - | - | - | - | - | MMA 0 | AN 0 |
| Split feeding of A (AMS end, min) | - | - | - | - | - | - | SM 360 | MMA 360 | AN 360 |
| Reactor (rpm) | 500 | 500 | 500 | 500 | 500 | - | 500 | 500 | 500 |
| Composition distribution of A (AMS) | 36.3 | 39.3 | 13.3 | 57.1 | SM 36.5 | 36.5 | SM 36.5 | 40.1 | 38.1 |
| Composition distribution of A (MMA) | 46.2 | 41.4 | 70.7 | 24.2 | 46.2 | 44.3 | 45.5 | 43.8 | 46.5 |
| Composition distribution of A (AN) | 17.5 | 19 | 16 | 18.7 | 17.3 | 19.2 | 18 | 16.1 | 15.4 |
| Physical properties of A (refractive index) | 1.532 | 1.531 | 1.508 | 1.553 | 1.531 | 1.532 | 1.532 | 1.535 | 1.533 |

| Classification | | Compa rative Example 1 | Compa rative Example 2 | Compa rative Example 3 | Compa rative Example 4 | Compa rative Example 5 | Compa rative Example 6 | Reference Example 1 | Reference Example 2 | Reference Example 3 |
|---|---|---|---|---|---|---|---|---|---|---|
| Physical properties of A (polymerization conversion rate, %) | | 98 | 97 | 99 | 92 | 99 | 83 | 99 | 97 | 96 |
| Physical properties of A (haze, %) | | 0.5 | 0.5 | 0.8 | 0.3 | 0.5 | 0.2 | 0.4 | 0.4 | 0.5 |
| Physical properties of A (color b value) | | 8.5 | 8.5 | 8.3 | 9 | 8.5 | 6.4 | 6.4 | 9.7 | 10.1 |
| Physical properties of A (Tg) | | 117.1 | 119.5 | 120.1 | 125.0 | 108.0 | 119.1 | 109.0 | 117.5 | 116.0 |
| Oligomer content of A (%) | | 0.52 | 0.53 | 0.52 | 0.52 | 0.52 | 0.89 | 0.52 | 0.58 | 0.59 |
| Physical propertie s of thermopla stic resin compositi on | Scratch resistance | F | F | F | HB | HB | H | HB | HB | HB |
| | Tg (°C) | 114.3 | 116.6 | 117 | 121.9 | 105.1 | 116.3 | 106.3 | 114.2 | 112.1 |
| | Flow marks | 4 | 4 | 4 | 2 | 4 | 5 | 4 | 4 | 4 |

As shown in Tables 1 and 2, compared to Comparative Examples 1 to 6 outside the range of the present invention, in the case of Examples 1 to 8 according to the present invention, heat resistance, pencil hardness (scratch resistance), and surface appearance are excellent. In addition, in the case of the styrene copolymers (A) of Examples 1 to 8 according to the present invention, a refractive index and a residual oligomer content are reduced, and polymerization conversion rate and transparency are improved. Accordingly, there is an effect of improving the surface appearance and glass transition temperature of a resin composition.

On the other hand, in the case of Comparative Examples 1 to 6 in which split feeding of monomers or suspension polymerization was not performed, in all cases, a residual oligomer content is 0.52 % by weight or more.

In addition, in the case of Comparative Examples 3 and 4 in which the weight ratio of MMA/AMS in the styrene copolymer (A) does not satisfy 1:1 to 1:5, pencil hardness (scratch resistance) and surface appearance are poor.

In addition, in the case of Comparative Example 5 in which unsubstituted styrene was used instead of alkyl-substituted styrene, heat resistance and scratch resistance are poor.

In addition, in the case of Comparative Example 6 in which bulk polymerization was performed, a residual oligomer content in the styrene copolymer is increased, and polymerization conversion rate is reduced.

In addition, in the case of Reference Example 1 in which unsubstituted styrene was fed in a split feeding manner, heat resistance and scratch resistance are reduced.

In addition, in the case of Reference Example 2 in which the (meth)acrylate-based monomer was fed in a split feeding manner and in the case of Reference Example 3 in which the vinyl cyanide-based monomer was fed in a split feeding manner, both polymerization conversion rate and scratch resistance are reduced.

In conclusion, by including a graft copolymer and a styrene copolymer having a specific refractive index, polymerization conversion rate, and residual oligomer content due to the uniform composition distribution of a polymer, a thermoplastic resin composition applicable to a molded article having excellent heat resistance, scratch resistance, and surface appearance may be provided.

**Claims**

1. A method of preparing a styrene copolymer, comprising:

   adding a reaction solution comprising 100 parts by weight of a monomer mixture comprising 35 to 65 % by weight of a (meth)acrylate-based monomer, 10 to 30 % by weight of a vinyl cyanide-based monomer, and 20 to 40 % by weight of an aromatic vinyl-based monomer; 100 to 200 parts by weight of a water-based solvent; and 0.1 to 10 parts by weight of a dispersant to a reactor to perform polymerization,
   wherein the aromatic vinyl-based monomer is styrene, one or more hydrogens of which are substituted with an alkyl group,
   some of the aromatic vinyl-based monomer is fed into the reactor batchwise before start of polymerization, and a remainder is continuously fed into the reactor from a time point when a temperature of the reactor reaches 90 to 110 °C to perform polymerization.

2. The method according to claim 1, wherein a weight ratio of the batchwise fed aromatic vinyl-based monomer to the continuously fed aromatic vinyl-based monomer is 1:0.4 to 1:2.

3. The method according to claim 1, wherein a weight ratio of the aromatic vinyl-based monomer to the (meth)acrylate-based monomer is 1:1 to 1:8.

4. The method according to claim 1, wherein the aromatic vinyl-based monomer is styrene, one or more hydrogens of which are substituted with an alkyl group having 1 to 3 carbon atoms.

5. The method according to claim 1, wherein, in the reactor, polymerization is performed at 80 to 130 °C and 400 to 600 rpm for 8 to 10 hours.

6. The method according to claim 1, comprising adjusting a pH of polymerization slurry generated in the reactor to 1 to 4.

7. The method according to claim 1, wherein the dispersant is a phosphate metal salt.

8. A styrene copolymer prepared by the method according to any one of claims 1 to 7 and having a glass transition temperature (Tg) of 115 °C or higher, an oligomer content of 0.51 % by weight or less, and a refractive index of 1.55 or less.

9. The styrene copolymer according to claim 8, wherein, based on 100 % by weight in total of the styrene copolymer, the styrene copolymer comprises 39 to 47 % by weight of a (meth)acrylate-based monomer, 18 to 21 % by weight of a vinyl cyanide-based monomer, and 35 to 43 % by weight of an alkylsubstituted styrene-based monomer.

10. The styrene copolymer according to claim 8, wherein the styrene copolymer has a haze of 0.3 % or less and a color b value of 6.0 to 7.0.

11. A thermoplastic resin composition, comprising:

a styrene copolymer comprising a (meth)acrylate-based monomer, a vinyl cyanide-based monomer, and an aromatic vinyl-based monomer; and
a graft copolymer comprising an acrylic-based rubber polymer, an aromatic vinyl-based monomer, and a vinyl cyanide-based monomer,
wherein, based on 100 % by weight in total of the styrene copolymer, the styrene copolymer comprises 39 to 47 % by weight of a (meth)acrylate-based monomer, 18 to 21 % by weight of a vinyl cyanide-based monomer, and 35 to 48 % by weight of styrene, one or more hydrogens of which are substituted with an alkyl group.

12. The thermoplastic resin composition according to claim 11, wherein the aromatic vinyl-based monomer comprised in the styrene copolymer is styrene, one or more hydrogens of which are substituted with an alkyl group, and the aromatic vinyl-based monomer comprised in the graft copolymer is styrene.

13. A method of preparing a thermoplastic resin composition, comprising:

mixing 55 to 75 % by weight of a styrene copolymer and 25 to 45 % by weight of a graft copolymer comprising an acrylic-based rubber polymer, an aromatic vinyl-based monomer, and a vinyl cyanide-based monomer and performing melt-kneading and extrusion,
wherein the styrene copolymer is prepared by the method according to any one of claims 1 to 7.

14. A molded article manufactured using the thermoplastic resin composition according to claim 11.

| INTERNATIONAL SEARCH REPORT | International application No. |
|---|---|
| | **PCT/KR2021/008764** |

**A. CLASSIFICATION OF SUBJECT MATTER**

**C08L 33/06**(2006.01)i; **C08L 25/14**(2006.01)i; **C08L 25/12**(2006.01)i; **C08L 51/04**(2006.01)i; **C08F 220/10**(2006.01)i; **C08K 5/521**(2006.01)i; **C08F 212/08**(2006.01)i; **C08F 279/02**(2006.01)i; **C08F 2/18**(2006.01)i

According to International Patent Classification (IPC) or to both national classification and IPC

**B. FIELDS SEARCHED**

Minimum documentation searched (classification system followed by classification symbols)

C08L 33/06(2006.01); C08F 2/18(2006.01); C08F 212/08(2006.01); C08F 257/00(2006.01); C08F 265/06(2006.01); C08F 265/08(2006.01); C08J 5/00(2006.01); C08L 25/12(2006.01); C08L 51/04(2006.01); C08L 69/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 스티렌(styrene), 공중합체(copolymer), 아크릴레이트(acrylate), 그라프트(graft), 열가소성(thermoplastic)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2019-0134452 A (LG CHEM, LTD.) 04 December 2019 (2019-12-04)<br>See claim 1; and paragraphs [0031]-[0104]. | 1-14 |
| Y | KR 10-2014-0092735 A (CHEIL INDUSTRIES INC.) 24 July 2014 (2014-07-24)<br>See claims 1-10; and paragraphs [0033]-[0038]. | 1-14 |
| A | JP 2012-184301 A (NIPPON A&L INC.) 27 September 2012 (2012-09-27)<br>See entire document. | 1-14 |
| A | KR 10-2010-0059263 A (KOREA KUMHO PETROCHEMICAL CO., LTD.) 04 June 2010 (2010-06-04)<br>See entire document. | 1-14 |
| A | KR 10-2000-0003096 A (SHINHO PETROCHEMICAL CO., LTD.) 15 January 2000 (2000-01-15)<br>See entire document. | 1-14 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **25 October 2021** | **26 October 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

INTERNATIONAL SEARCH REPORT
Information on patent family members

International application No.

**PCT/KR2021/008764**

| Patent document cited in search report | | | Publication date (day/month/year) | Patent family member(s) | | | Publication date (day/month/year) |
|---|---|---|---|---|---|---|---|
| KR | 10-2019-0134452 | A | 04 December 2019 | CN | 110785445 | A | 11 February 2020 |
| | | | | EP | 3597674 | A1 | 22 January 2020 |
| | | | | EP | 3597674 | B1 | 27 January 2021 |
| | | | | WO | 2019-225827 | A1 | 28 November 2019 |
| KR | 10-2014-0092735 | A | 24 July 2014 | US | 2014-0187719 | A1 | 03 July 2014 |
| | | | | US | 9493648 | B2 | 15 November 2016 |
| | | | | WO | 2014-104485 | A1 | 03 July 2014 |
| JP | 2012-184301 | A | 27 September 2012 | JP | 5269934 | B2 | 21 August 2013 |
| KR | 10-2010-0059263 | A | 04 June 2010 | None | | | |
| KR | 10-2000-0003096 | A | 15 January 2000 | None | | | |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200149422
- KR 1020210088233
- US 4448580 A